# EUROPÄISCHE PATENTSCHRIFT

(11) **EP 4 209 752 B1**
(45) Veröffentlichungstag und Bekanntmachung des Hinweises auf die Patenterteilung: **28.05.2025**
(21) Anmeldenummer: 23150174.3
(22) Anmeldetag: 03.01.2023
(51) Int. Cl.: G01B 11/06, B29C 48/92, G01B 21/04

(54) **VERFAHREN ZUR KALIBRIERUNG EINER THZ-MESSVORRICHTUNG UND EXTRUSIONS- UND MESSSYSTEM**
METHOD FOR CALIBRATING A THZ MEASURING DEVICE AND EXTRUSION AND MEASURING SYSTEM
PROCÉDÉ D'ÉTALONNAGE D'UN DISPOSITIF DE MESURE THZ ET SYSTÈME D'EXTRUSION ET DE MESURE

(30) Priorität: 07.01.2022 US 202263297310 P
(43) Veröffentlichungstag der Anmeldung: 12.07.2023
(73) Patentinhaber: CiTEX Holding GmbH, 49324 Melle (DE)
(72) Erfinder: Unruh, Andrej, Bird in Hand, PA 17505 (US)
(74) Vertreter: Bremer, Ulrich

(56) Entgegenhaltungen:
- WO-A1-2021/259426
- DE-A1- 102018 128 248
- DE-A1- 102019 119 491
- DE-U1- 202020 005 529

## Beschreibung

Die Erfindung betrifft ein Verfahren zur Kalibrierung einer THz-Messvorrichtung in einer Extrusionslinie, sowie ein Mess- und Extrusionssystem.

THz-Messvorrichtungen werden unter anderem in Extrusionslinien zur Vermessung der extrudierten Profile eingesetzt. Ein Extruder gibt ein Profil, insbesondere ein Rohr, aus, das nachfolgend durch eine THz- Messvorrichtung auf relevante geometrische Eigenschaften, z. B. seine Wanddicke sowie seinen Außendurchmesser und Innendurchmesser, vermessen wird. Hierbei wird von einem THz-Sender Terahertz-Strahlung, die auch im Radar- und Mikrowellen-Bereich liegen kann, ausgegeben und an den Grenzflächen des Profils teilweise reflektiert, so dass aus Laufzeiten des reflektierten Signals direkt oder indirekt die geometrischen Eigenschaften bestimmt werden können. In die Ermittlung von geometrischen Eigenschaften wie z. B. der Wanddicke geht im Allgemeinen auch der Brechungsindex des Materials des Profils ein.

Die WO 2017/000933 A1 zeigt eine Terahertz-Messvorrichtung in einer Extrusionslinie, wobei ein extrudiertes Rohr mit zunächst nicht bekanntem Brechungsindex vermessen wird. Die WO 2016/139155 A1 beschreibt eine Vorrichtung und ein Verfahren zum Messen des Durchmessers und/oder der Wanddicke eines Strangs, wobei zunächst in einer Leermessung Terahertz-Strahlung von einem Sender durch einen leeren Messraum zu einem Reflektor ausgegeben und der reflektierte Strahl gemessen wird, und nachfolgend die Messung mit einem Messobjekt durchgeführt wird, um Eigenschaften des Strangs zu ermitteln.

Die DE 10 2016 119 728 A1 beschreibt ein tragbares THz-Messgerät zur Ermittlung mindestens einer Schichtdicke eines Prüfobjektes, wobei am vorderen Endbereich des THz-Messgerätes eine Formblende mit einer Auflagekontur vorgesehen ist, die eine senkrechte Positionierung des THz-Messgerätes an Profilen mit vorbestimmtem Durchmesser ermöglicht.

Die Ermittlung sowohl der geometrischen Eigenschaften als auch des Brechungsindex eines Profils ist somit im Allgemeinen schwierig. Weiterhin können Fehler bzw. Defekte der stationären THz-Messvorrichtung zu Abweichungen der Messergebnisse führen.

US 2015/0323452 A1 beschreibt ein Verfahren zum Bestimmen von Materialeigenschaften eines Objektes. Hierbei wird eine Dicke an einem Punkt des Objektes auf nicht-invasive Weise bestimmt. Weiterhin ist beschrieben, eine Terahertz-Messung durchzuführen, indem Terahertz-Strahlung unter Verwendung eines Terahertz-Emitters durch das Objekt geleitet und die Terahertz-Strahlung mittels eines Terahertz-Detektors gemessen wird. Weiterhin ist beschrieben, optische Eigenschaften an dem Punkt des Objektes mittels der Terahertz-Messung und der Dicke-Messung zu ermitteln.

Die DE 10 2019 119 491 A1 beschreibt ein Verfahren und eine Vorrichtung zum Vermessen eines rohrförmigen Stranges, der aus einer Extrusionsvorrichtung austritt. Hierbei wird in einem ersten Messbereich Terahertz-Strahlung von mindestens einer ersten Strahlungsquelle von innen auf die Innenfläche des rohrförmigen Stranges geleitet, und in einem zweiten Messbereich, der in Förderrichtung des Stranges stromab des ersten Messbereichs liegt, Terahertz-Strahlung von mindestens einer zweiten Strahlenquelle von außen auf die Außenfläche des rohrförmigen Stranges geleitet. Hierbei werden Veränderungen der geometrischen Parameter zwischen den Messpunkten ermittelt.

WO 2021/259426 A1 zeigt ein THz-Messverfahren und eine THz-Messvorrichtung zum Vermessen eines Messobjektes, insbesondere Rohres. Hierbei wird eine THz-Sensoranordnung mit einer Leerlaufstrecke zwischen zwei THz-Transceivern bereitgestellt, eine Kalibrierung unter Messung der Laufzeit durch die Leerlaufstrecke durchgeführt, ein Messobjekt in dem Messbereich positioniert, und es werden zwei THz-Messungen von den beiden Messpositionen aus durchgeführt, zwischen denen die Leerlaufstrecke ausgebildet ist, wobei eine Gesamtlaufzeit durch den Messbereich mit dem Messobjekt ermittelt wird.

Aus DE 10 2018 128 248 A1 ist ein Verfahren zum Bestimmen des Brechungsindex eines rohrförmigen Körpers bekannt, bei dem der rohrförmige Körper in einem Messbereich durch eine Sendeeinrichtung mit Messtrahlung im Gigahertz- oder Terahertzfrequenzbereich bestrahlt wird, wobei die Messstrahlung an Grenzflächen des rohrförmigen Körpers reflektiert und die reflektierte Messstrahlung durch eine Empfangseinrichtung detektiert wird, wobei anhand der reflektierten Messstrahlung die optische Wanddicke mindestens eines Wandabschnittes des rohrförmigen Körpers bestimmt und der Brechungsindex des Körpers aus einem Vergleich des Außen- und Innendurchmessers des rohrförmigen Körpers mit der bestimmten optischen Wanddicke bestimmt wird.

DE 20 2020 005 529 U1 beschreibt eine Vorrichtung zur Durchführung eines Verfahrens zum Bestimmen mindestens eines Geometrieparameters eines noch nicht vollständig verfestigten, noch fließfähige Anteile aufweisenden strang- oder plattenförmigen Gegenstands. Hierbei wird in einem Ermittlungsschritt für den strang- oder plattenförmigen Gegenstand ein Zusammenhang zwischen dem Brechungsindex des strang- oder plattenförmigen Gegenstands und einer im Zug seiner vollständigen Verfestigung erfolgenden Schrumpfung ermittelt, dann werden der Brechungsindex und ein Geometrieparameter des Gegenstands ermittelt, und nachfolgend wird aus diesen Werten der Geometrieparameter im vollständig verfestigten Zustand des strang- oder plattenförmigen Gegenstandes berechnet.

Der Erfindung liegt die Aufgabe zugrunde, ein Verfahren und ein Extrusions- und Messsystem zu schaffen, die eine sichere Vermessung von Profilen ermöglichen.

Diese Aufgabe wird durch ein Verfahren und ein Extrusions- und Messsystem nach den unabhängigen Ansprüchen gelöst. Die Unteransprüche beschreiben bevorzugte Weiterbildungen.

Das erfindungsgemäße Verfahren kann insbesondere mit dem erfindungsgemäßen Extrusions- und Messsystem durchgeführt werden.

Somit ist in der Extrusionslinie eine stationäre THz-Messvorrichtung vorgesehen, die das extrudierte Profil inline, d.h. in der Produktionslinie, vermessen kann. Hierdurch wird eine direkte und durchgängige Vermessung während der Extrusion ermöglicht, und ein erstes Messsignal als stationäres THz-Messsignal erzeugt.

Weiterhin sind zwei tragbare bzw. portable Messgeräte zur Vermessung von Profilstücken vorgesehen, die aus dem extrudierten Profil abgetrennt werden und nachfolgend abkühlen. Hierbei ist zum einen ein Referenz- Messgerät vorgesehen, das auf einem zu der THz-Vermessung alternativen Messprinzip beruht und direkt die geometrische Wanddicke ermitteln kann. Das Referenz- Messgerät weist insbesondere eine Messgenauigkeit bis in den Mikrometer-Bereich auf. Als Referenz- Messgerät kann insbesondere ein mechanisches Messgerät, Ultraschall-Messgerät und/oder Laser-Messgerät vorgesehen sein.

Das mechanische Messgerät kann als Zange bzw. Klemmeinrichtung mit Klemmbacken zur Anlage an Wandflächen des Profilstücks ausgebildet sein. Somit kann das tragbare, mechanische Messgerät mit definierter mechanischer Vorspannung bzw. vorbestimmtem mechanischen Druck an dem Profil anliegen, so dass sichere reproduzierbare mechanische Messungen ermöglicht werden, insbesondere auch ohne bzw. ohne relevante Verformung des Produktes, und somit ein zweites Messsignal als mechanisches mobiles Messsignal erzeugt wird.

Das Ultraschall- Messgerät wird vorzugsweise von außen an das Profilstück angesetzt, d.h. insbesondere senkrecht auf die Außenfläche des Profilstücks, wobei z. B. eine Anlage eines Messkopfs des Ultraschall- Messgerätes auf der Außenfläche des Profils erfolgen kann, z. B. mit einem Gel zur Schallkopplung, das auf den Messkopf aufgetragen ist.

Weiterhin ist ein tragbares THz-Messgerät vorgesehen, das vom Benutzer an das Profilstück angelegt werden kann und - im Allgemeinen ähnlich wie die stationäre Messvorrichtung - Laufzeiten zwischen den Wandflächen misst. Somit wird vorzugsweise eine nachfolgende Messung des abgekühlten Profilstücks entsprechend der vorherigen inline-Vermessung des warmen Profils vorgenommen, insbesondere mit gleichen elektromagnetischen Eigenschaften wie der Frequenz bzw. dem Frequenzband. So kann das tragbare THz-Messgerät insbesondere den gleichen THz-Transceiver wie die stationäre inline-Messvorrichtung aufweisen; somit wird ein drittes Messsignal als mobiles THz-Messsignal erzeugt.

Somit werden vorzugsweise nach der Extrusion Profilstücke abgetrennt und vorzugsweise zunächst abgekühlt, um die geometrischen Eigenschaften der endgültig ausgekühlten Profilstücke berücksichtigen zu können. Die Abkühlung kann z. B. auch über einen längeren Zeitraum erfolgen. So kann z. B. das Profilstück abgetrennt werden und erst am nachfolgenden Tag weiter vermessen werden.

Nachfolgend wird das Profilstück zweimal vermessen. Die Vermessung erfolgt reproduzierbar sowohl mit dem Referenz-Messgerät als auch dem tragbaren THz-Messgerät, insbesondere an der gleichen Mess-Stelle. Hierdurch wird die Vergleichbarkeit der Messungen gewährleistet. Hierzu kann der Benutzer insbesondere die Mess-Stelle markieren, so dass mit geringem Aufwand eine eindeutige Auffindbarkeit gewährleistet ist. Die Mess-Stelle weist insbesondere einen definierten Abstand von einem Ende des Profilstücks auf, damit sie zum einen nicht zu nahe am Ende liegt und durch mechanische Deformationen beeinflusst wird, die vom Trennvorgang hervorgerufen wurden; zum anderen wird auch eine gute Erreichbarkeit für das Referenz-Messgerät ermöglicht, insbesondere für ein mechanisches Referenz-Messgerät, das vom Ende her angelegt wird. Die Reihenfolge der Referenzmessung und der Messung mit dem tragbaren THz-Messgerät ist grundsätzlich beliebig. Es können z. B. auch mehrere Messungen in Umfangsrichtung um das Profilstück bei dem definierten Abstand durchgeführt werden, um eine mittlere Wanddicke in den definierten Messbereichen bzw. Messpunkten zu ermöglichen.

Durch die Referenz-Messung mit dem alternativen Messprinzip kann die Wanddicke unabhängig vom Brechungsindex der THz-Strahlung sicher ermittelt werden. Hierdurch erfolgt eine Kalibrierung des nachfolgend angesetzten tragbaren THz-Messgerätes, so dass der Brechungsindex des Profilstücks ermittelt werden kann.

Mit dem ermittelten Brechungsindex wird nachfolgend die stationäre THz-Messvorrichtung kalibriert, d.h. für die stationären THZ-Messungen wird der ermittelte Brechungsindex eingesetzt, wodurch eine Ermittlung von Wanddicken aus dem stationären THz-Messsignal möglich ist.

Nachfolgend kann die stationäre THZ-Messung mit einer Messung durch das tragbare THz-Messgerät verglichen werden, d.h. es kann insbesondere direkt an die stationäre Messung eine Messung mit dem tragbaren THz-Messgerät an dem warmen, noch nicht abgetrennten Profil erfolgen, d.h. anders als die mobile THz-Messung an dem abgekühlten Rohrstück.

Somit kann eine Kalibrierung des stationären THz-Messsignals des noch warmen Profils nach der Extrusion auf die final in den abgekühlten Profilstücken ausgebildete Wanddicke erfolgen, die sich nach dem Schrumpf ergibt, so dass Abweichungen bereits inline direkt erkannt und korrigiert werden können, z. B. auch als Regelung durch geeignete Ansteuerung der Extrusionslinie.

Weiterhin können durch den Vergleich Abweichungen bzw. Fehler der stationären THz-Messvorrichtung ermittelt werden.

Die Vermessung der Profilstücke durch die tragbaren Geräte verzögert oder beeinträchtigt nicht die kontinuierliche Extrusion des Profils. Auch können vom Benutzer gegebenenfalls Messungen nach Belieben wiederholt vorgenommen werden.

Derartige Vergleichsmessungen können während der Produktion wiederholt durchgeführt werden, so dass eine hohe Sicherheit und Genauigkeit ohne Verzögerungen der Produktion ermöglicht wird.

Gemäß einer vorteilhaften Ausbildung wird das Profil an der Mess-Stelle markiert. Diese Markierung kann vor oder nach der stationären THz-Vermessung in der stationären THz-Messvorrichtung erfolgen. Die Markierung kann z. B. mittels eines Stiftes erfolgen. Somit kann das Profilstück auch nachfolgend im abgekühlten Zustand wieder sicher an der markierten Stelle vermessen werden, so dass Messungen an unterschiedlichen Stellen ausgeschlossen werden können und ein sicherer Vergleich ermöglicht wird.

Als Profil kann insbesondere ein Rohr, d.h. rundes Rohr extrudiert und vermessen werden, aber auch z. B. ein Rechteck-Profil, oder auch eine Schicht, z. B. eine Folie, oder halboffenes Profil, z. B. eine Regenrinne.

Erfindungsgemäß wird auch ein Extrusions- und Messsystem aus der Extrusionslinie mit der stationären THz-Messvorrichtung, sowie den beiden tragbaren Messgeräten, d.h. dem tragbaren Referenz-Messgerät und dem tragbaren THz-Messgerät, geschaffen.

Erfindungsgemäß ist vorzugsweise weiterhin ein Verfahren zur THz-Vermessung von Profilen vorgesehen, bei dem zunächst das erfindungsgemäße Verfahren zur Kalibrierung der stationären THz-Messvorrichtung durchgeführt wird und nachfolgend ein Profil extrudiert und mit der kalibrierten stationären THz-Messvorrichtung vermessen wird. Gemäß einem weiteren Aspekt der Erfindung ist vorzugsweise ein Verfahren zur Herstellung und Vermessung von Profilen vorgesehen, bei dem ein Profil extrudiert und nachfolgend das extrudierte Profil mit dem Verfahren zur THz-Vermessung vermessen wird und in Abhängigkeit der THz-Vermessung mit der kalibrierten stationären THz-Messvorrichtung mindestens ein Regelparameter des Herstellungsverfahrens, z. B. eines Extruders und/oder einer Kalibrierhülse, oder eines Abziehers zum Abziehen des Profils, geändert wird.

Die Messsignale werden nachfolgend zur eindeutigen Kennzeichnung vorzugsweise als erstes bis drittes Messsignal bezeichnet, d.h. als stationäres erstes THz-Messsignal, mobiles zweites Messsignal und mobiles drittes THz-Messsignal. Somit sind bei dieser Bezeichnung das erste und dritte Messsignal THz-Messsignale, und das zweite und dritte Messsignal mobile Messsignale.

Die Erfindung wird im Folgenden anhand der beiliegenden Zeichnungen an einer Ausführungsform näher erläutert. Es zeigen:
- Fig. 1: eine Extrusionslinie mit einem Terahertz-Messsystem gemäß einer Ausführungsform der Erfindung;
- Fig. 2, 3: die Vermessung eines Profilstücks durch das Referenz-Messgerät und die tragbaren THz-Messgeräte;
- Fig. 4: ein Signaldiagramm der stationären THz-Messvorrichtung;

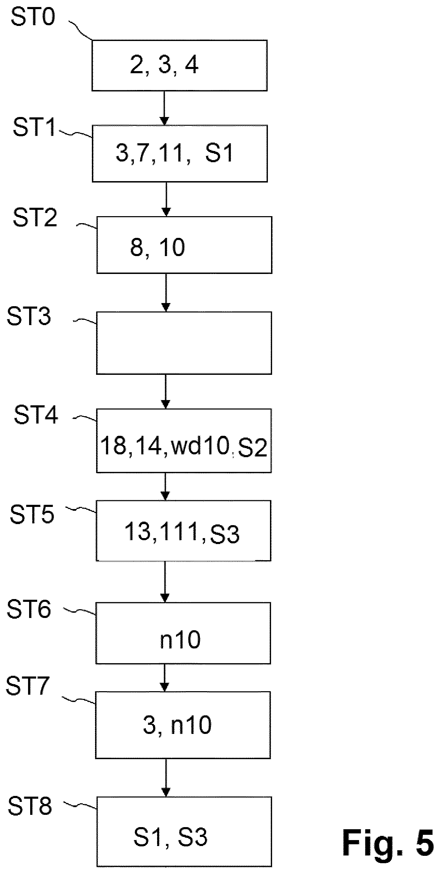

- Fig. 5: ein Flussdiagramm eines erfindungsgemäßen Verfahrens.

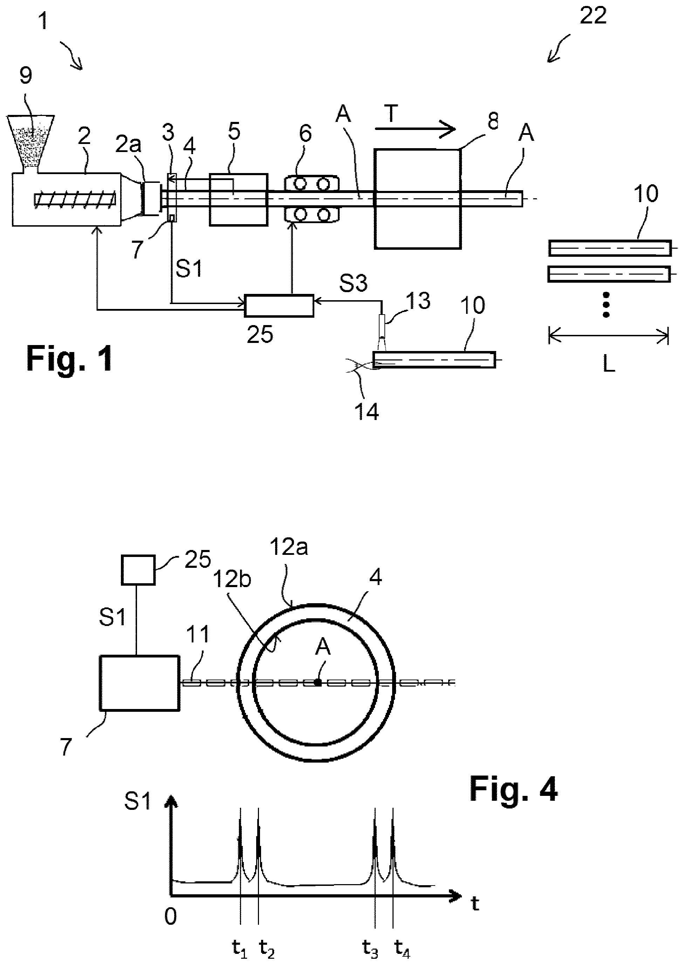

In einer Extrusionslinie 1 sind gemäß Figur 1 ein Extruder 2 mit Kalibrierhülse 2a, eine stationäre THz-Messvorrichtung 3, eine Kühleinrichtung 5, ein Abzug 6 sowie eine Trenneinrichtung 8 vorgesehen.

Ausgangsmaterial 9, z. B. Granulat, Pellets, Pulver oder Flocken aus Kunststoffmaterial oder Gummi, ggf. auch mit Additiven, wird dem Extruder 2 zugeführt und von der Kalibrierhülse 2a als Endlos-Profil, hier als ein Rohr 4 ausgegeben - Extrusionsschritt ST0. Das Rohr 4 wird von dem Abzug 6 abgezogen und in der Kühleinrichtung 5 gekühlt, so dass insbesondere die Zuführrate des Ausgangsmaterials 9, die Förderrate im Extruder 2, die Abzugsgeschwindigkeit des Abzugs 6 und die Einstellungen der Kalibrierhülse 2a die Ausbildung des Rohrs 4 bestimmen. Das Rohr 4 wird nachfolgend in der Trenneinrichtung 8 in Rohrstücke 10 definierter Länge L unterteilt.

Nach der Extrusion erfolgt in Schritt ST1 eine inline-Vermessung durch die stationäre THz-Messvorrichtung 3, die ein oder mehrere THz-Sensoren 7 aufweisen kann, die um die Rohrachse bzw. Symmetrieachse A herum angeordnet sind. Die Sensoren 7 geben THz-Strahlung 11 aus und detektieren reflektierte THz-Strahlung, wodurch geometrische Eigenschaften vermessen werden können, insbesondere Außendurchmesser D, Innendurchmesser I, sowie Wanddicken wd4 der Wandbereiche des Rohrs 4 ermittelt. Zur Ausbildung eines mehrschichtigen Rohrs 4 können auch Schichtdicken bzw. Wanddicken mehrerer Schichten ermittelt werden. Ergänzend zu diesen Längeabmaßen können auch z. b. Deformationen wie eine Ovalität und z. B. ein durch Fließen des Materials bewirktes Sagging aus den Messdaten ermittelt werden.

Die stationäre THz-Messvorrichtung 3 kann z. B. direkte Laufzeitmessungen (time-in-flight), ggf. auch mit Frequenzmodulation und/oder Messung mit gepulster Strahlung durchführen, z. B. im Frequenzbereich von 0,01 bis 50 THz, insbesondere 10 GHz bis 30 THz. Somit kann die THz-Strahlung 11 auch in einem Bereich liegen, der ganz oder teilweise mit Radarstrahlung und/oder Mikrowellenstrahlung übereinstimmt oder sich überlappt.

Bei der stationären THz-Vermessung wird gemäß dem Messdiagramm der Figur 4 ein stationäres Messsignal S1 mit Signalpeaks zu den Zeitpunkten t1, t2, t3, t4 ermittelt, die Teilreflexionen an einer äußeren Wandfläche 12a und einer inneren Wandfläche 12b des vorderen Wandbereichs und hinteren Wandbereichs entsprechen. Die Zeitdifferenzen t2-t1 sowie t4-t3 hängen somit von der geometrischen Wanddicke wd4 sowie dem Brechungsindex n4 des Materials des Rohrs 4 ab. Bei Kenntnis des Brechungsindex n4 können somit - bei intakter THz-Messvorrichtung 3 - die Wanddicken wd4, und entsprechend auch weitere geometrische Abmaße des Rohrs 4 genau ermittelt werden.

Grundsätzlich ist in Fig. 4 eine Vermessung des hinteren Wandbereichs des Rohrstücks 10, d.h. die Vermessung in den Zeitpunkten t3, t4, nicht erforderlich, da eine Rundumvermessung des Rohrstücks 10 erfolgen kann und somit jeder Wandbereich als vorderer Wandbereich vermessen werden kann.

In Schritt ST2 wird durch die Trenneinrichtung 8 aus dem Rohr 4 ein Rohrstück 10 abgetrennt. Nachfolgend - und auch bereits vor dem Abtrennen - kühlt das Rohrstück 10 gemäß dem Abkühlschritt ST3 ab, insbesondere auf Raumtemperatur, wobei insbesondere ein Schrumpf (differential shrinking) ds, d.h. eine relative Änderung der Abmessungen auftritt.

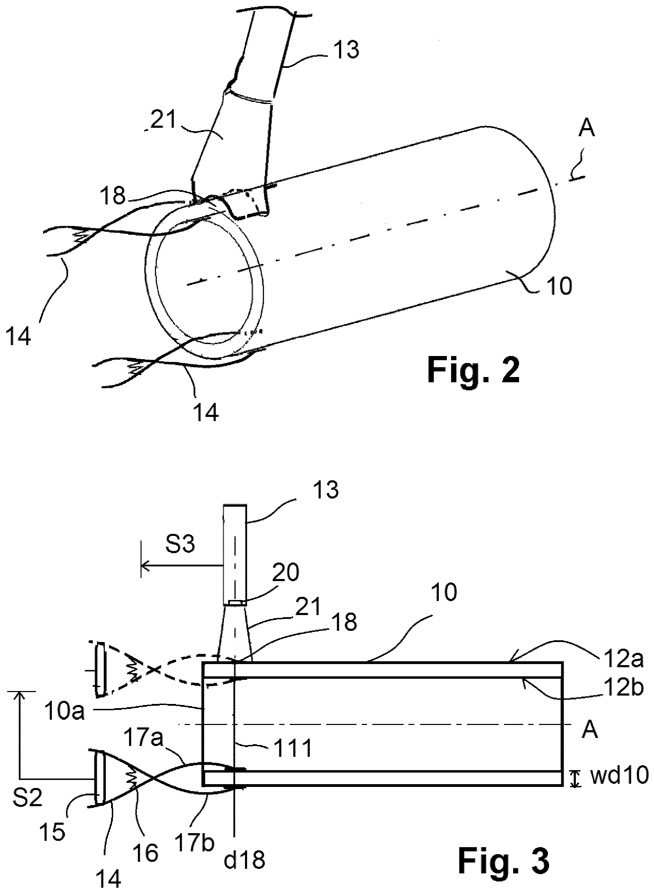

An dem abgetrennten Rohrstück 10 wird/werden in einem Abstand d18, z. B. 2,5 Inch (6,35 cm), von einem der Rohrstück-Enden 10a aus, eine oder mehrere Mess-Stellen 18 markiert. In dem Schritt ST4 erfolgt zunächst gemäß Fig. 2, 3 eine händische Vermessung mittels eines Referenz-Messgerätes, das in dieser Ausführungsform als mechanisches Messgerät 14 an der einen oder den mehreren Mess-Stellen 18 angesetzt wird. Das mechanische Messgerät 14 kann insbesondere als Zange 14 mit Mikrometer-Sensor 15 ausgebildet sein, wobei die Zange 14 mechanisch durch eine Feder 16 vorgespannt (biased, preloaded) ist, d. h. die Zangenbacken 17a und 17b greifen in der Mess-Stelle 18 mit einer vorbestimmten Kraft F bzw. vorbestimmtem Druck an die äußere Wandfläche 12a und die innere Wandfläche 12b an. Der Benutzer legt somit das mechanische Messgerät 14 vom Ende 10a des abgeschnittenen Rohrstücks 10 her an die Mess-Stelle 18 an und erhält ein Referenz-Mess-Signal S2 mit einem sehr genauen Wert der geometrischen Wanddicke wd10.

Nachfolgend erfolgt in Schritt ST5 an der gleichen Mess-Stelle 18 eine mobile, händische THz-Vermessung des Rohrstücks 10 mittels eines tragbaren THz-Messgerätes 13, das mit seiner Auflagekontur 21 auf die äußere Wandfläche 12a aufgelegt wird. Die Auflagekontur 21 stellt eine definierte Auflage des THz-Messgerätes 13 senkrecht auf der äußeren Wandfläche 12a, d.h. radial zur Rohrachse A hin, sicher. In Fig. 2 und 3 werden die Messgeräte 13, 14 somit an der gleichen Mess-Stelle 18 am Profilstück 10 angelegt; lediglich zur besseren Darstellung ist in Fig. 2, 3 das mechanische Messgerät 14 ergänzend auch an der gegenüberliegenden Seite gezeigt. Das tragbare THz-Messgerät 13 weist insbesondere gleiche oder ähnliche Komponenten auf wie die einzelnen THz-Sensoren 7 der stationären THz-Messvorrichtung 3, z. B. den gleichen THz-Transceiver 20, d. h. es gibt THz-Strahlung 111 aus, die der THz-Strahlung 11 der stationären THz-Messvorrichtung 3 entspricht, insbesondere die gleiche Messfrequenz und gleiche Bandbreite. Somit liefert das tragbare THz-Messgerät 13 wiederum ein Messsignal S3, das grundsätzlich dem Diagramm der Fig. 4 entspricht, bzw. zumindest eine Vermessung des vorderen Wandbereichs mit der Zeitdifferenz t2-t1 ermöglicht.

ST6, Kalibrierung des zweiten THz-Messsignals S3, d.h. Ermittlung des Brechungsindex n10:
Durch die ermittelte Wanddicke wd10 erfolgt eine Kalibrierung des zweiten THz-Messsignals S3 des tragbaren THz-Messgerätes 13. Da die Messungen an der gleichen Mess-Stelle 18 bei gleicher Temperatur erfolgten, können die Wanddicken wd10 der beiden Messungen gleichgesetzt werden, so dass aus dem zweiten THz-Messsignal S3 direkt der Brechungsindex n10 ermittelt werden kann.

ST7, Kalibrierung des ersten THz-Messsignals S1:
Der ermittelte Brechungsindex n10 wird zur Kalibrierung bzw. Auswertung des ersten THz-Messsignals S1 der stationären THz-Messvorrichtung 3 verwendet. Somit kann eine Kalibrierung des ersten Messsignals S1 bzw. der stationären Messvorrichtung 3, die das warme Material des Rohres 4 vermisst, auf Werte erfolgen, die dem später final ausgebildeten Profilstück 10 entsprechen, womit insbesondere auch direkt eine Regelung der Produktionsparameter, insbesondere des Extruders 2 und des Abzugs 6, erfolgen kann.

ST8, Vergleichsschritt:
Gemäß einer vorteilhaften Ausbildung erfolgt anschließend eine ergänzende Vergleichsmessung der stationären THz-Messvorrichtung 3 mit dem tragbaren THz-Messgerät 13 an dem extrudierten Rohr 4, d.h. inline. So kann insbesondere angenommen werden, dass aufgrund gleicher oder ähnlicher elektronischer Komponenten, insbesondere des gleichen THz-Transceivers 21, die elektronischen Messungen vergleichbar sind und z.B. die Laufzeiten t2-t1 der beiden THz-Messsignale S1, S3 sich entsprechen sollten. Durch diese Vergleichsmessung mit dem tragbaren THz-Messgerät erfolgt somit vorzugsweise eine Vermessung des inline ausgegebenen, noch warmen Rohres, anders als bei der ersten Messung mit dem tragbaren THz-Messgerät bei abgetrennten, vorzugsweise abgekühlten Rohrstück.

Somit ist vorzugsweise durch diese ergänzende Vergleichsmessung eine genaue Bestimmung des Schrumpfs ds bzw. direkt eine Kalibrierung der stationären Messung auf die finalen Werte des abgekühlten Profilstücks möglich; weiterhin können Messfehler, insbesondere auch Defekte der Sensoren 7 der stationären THz-Messvorrichtung 3, erkannt werden.

Somit wird ein Extrusions- und Messsystem 22 geschaffen, das die Extrusionslinie 1 mit dem Extruder 2, die stationäre THz-Messvorrichtung 3, vorzugsweise den Abzug 6 zum Abziehen des extrudierten Profils 4, die Trenneinrichtung 8, das Referenz-Messgerät 14, das tragbare THz-Messgerät 13, und die Steuer- und Auswerteeinrichtung 25 aufweist.

### Bezugszeichenliste

- 1: Extrusionslinie
- 2: Extruder
- 2a: Kalibrierhülse
- 3: Stationäre (inline) THz-Messvorrichtung
- 4: Profil, insbesondere Rohr
- 5: Kühleinrichtung
- 6: Abzug
- 7: Sensor der stationären THz-Messvorrichtung 3
- 8: Trenneinrichtung
- 9: Ausgangsmaterial
- 10: Profilstücke, insbesondere Rohrstücke
- 11: THz-Strahlung der stationären THz-Messvorrichtung 3
- 12a: äußere Wandfläche
- 12b: innere Wandfläche
- 13: tragbares THz-Messgerät
- 14: Referenz-Messgerät, insbesondere Zange
- 15: Mikrometer-Sensor
- 16: Feder zur mechanischen Vorspannung der Zangenbacken
- 17a, 17b: Zangenbacken
- 18: Mess-Stelle
- 19: Ende des Rohrstücks 10
- 20: THz-Transceiver in der stationären THz-Messvorrichtung 3 und dem tragbaren THz-Messgerät 13
- 21: Auflagekontur
- 22: Extrusions- und Messsystem zur Herstellung und Vermessung von Profilstücken 10
- 25: Steuer- und Auswerteeinrichtung
- 111: THz-Strahlung des tragbaren THz- Messgerätes 13

- D: Außendurchmesser
- I: Innendurchmesser
- d18: Abstand
- wd10: Wanddicke des Profilstücks 10
- n4: Brechungsindex des Profils 4
- n10: Brechungsindex des Profilstücks 10

- S1: erstes Messsignal, stationäres THz-Messsignal
- S2: zweites Messsignal, mobiles Referenz-Messsignal
- S3: drittes Messsignal, mobiles THz-Messsignal

- wd4: geometrische Wanddicke des Profils 4
- wd10: geometrische Wanddicke des Profilstücks 10

## Patentansprüche

1. Verfahren zur Kalibrierung einer stationären THz-Messvorrichtung (3), die während einer Extrusion eines Profils (4) geometrische Eigenschaften (wd4, D, I) des Profils (4) mittels ein oder mehrerer THz-Sensoren (7) vermisst,
mit mindestens folgenden Schritten:
- nach einer Extrusion des Profils (4) (Schritt ST0) Schritt der stationären inline THz-Vermessung durch Ausgabe von erster THz-Strahlung (11) von einem oder mehreren THz-Sensoren (7) der stationären THz-Messvorrichtung (3) auf das Profil (4), Detektion der an Grenzflächen (12a, 12b) des Profils (4) reflektierten THz-Strahlung und Ausgabe eines ersten Messsignals (S1) der stationären THz-Messvorrichtung (3) (Schritt ST1- stationäre inline THz-Vermessung),
- Referenz-Messung einer Wanddicke (wd10) an einer Mess-Stelle (18) eines Profilstücks (10) mittels eines Referenz-Messgerätes (14) auf Grundlage eines zur THz-Messung alternativen Referenz-Messverfahrens, unter Erzeugung eines zweiten Messsignals (S2) (Schritt ST4 - Referenz-Vermessung),
- Vermessung des Profilstücks (10) an der Mess-Stelle (18) mittels eines tragbaren THz-Messgerätes (13) unter Erzeugung eines mobilen dritten Messsignals (S3) (Schritt ST5 - mobile THz-Vermessung),
- Kalibrierung des dritten Messsignals (S3) auf Grundlage des zweiten Messsignals (S2), unter Ermittlung eines Brechungsindex (n10) des Profilstücks (10) (Schritt ST6 - Kalibrierung des dritten Messsignals),
- Kalibrierung des ersten Messsignals (S1) der stationären THz-Messvorrichtung (3) auf Grundlage des ermittelten Brechungsindex (n10) des Profilstücks (10) (Schritt ST7 - stationäre Kalibrierung).

2. Verfahren nach Anspruch 1, **dadurch gekennzeichnet, dass** nach der Kalibrierung des ersten Messsignals (S1) (Schritt ST7) nachfolgend ein Vergleichs-Schritt (ST8) durchgeführt wird,
bei dem das extrudierte Profil (4) durch die stationäre THz-Messvorrichtung (3) und nachfolgend noch vor dem Abtrennen (8) zum Vergleich mit dem tragbaren THz-Messgerät (13) vermessen wird,
und das erste Messsignal (S1) der stationären THz-Messvorrichtung (3) mit dem dritten Messsignal (S3) des tragbaren THz-Messgeräts (13) verglichen wird, und
in Abhängigkeit des Vergleichs die Kalibrierung als erfolgreich bewertet wird (ST8 - Vergleichs-Schritt).

3. Verfahren nach Anspruch 2, **dadurch gekennzeichnet, dass** bei dem Vergleichs-Schritt (ST8) ermittelt wird, ob die ermittelten Werte der Wanddicken (wd4) innerhalb eines Genauigkeitsbereichs liegen,
z. B. durch Vergleich einer Differenz der Werte mit einem Grenzwert, und bei Erreichen des Genauigkeitsbereichs, z. B. wenn eine Differenz der Werte unterhalb eines Grenzwertes liegt, die Kalibrierung als erfolgreich bewertet wird.

4. Verfahren nach Anspruch 2 oder 3, **dadurch gekennzeichnet, dass** die Vergleichs-Vermessung durch das tragbare THz-Messgerät (13) (Schritt ST8) direkt nach der stationären THz-Vermessung (Schritt ST1) und an derselben Mess-Stelle (18) des Profils (4) erfolgt, zur besseren Vergleichbarkeit des ersten Messsignals (S1) und dritten Messsignals (S3) (ST8- Vergleichs-Schritt).

5. Verfahren nach einem der vorherigen Ansprüche, **dadurch gekennzeichnet, dass** das Profilstück (10) erzeugt wird, indem es nach der Extrusion (Schritt ST0) und dem Schritt der stationären inline-Vermessung (Schritt ST1) mittels einer Trenneinrichtung (8) aus dem extrudierten Profil (4) abgetrennt wird (Schritt ST2).

6. Verfahren nach Anspruch 5, **dadurch gekennzeichnet, dass** das Profilstück (10) nach der Abtrennung (Schritt ST2) aktiv oder passiv abgekühlt wird, insbesondere auf eine Endtemperatur (Schritt ST3 - Abkühlung).

7. Verfahren nach einem der vorherigen Ansprüche, **dadurch gekennzeichnet, dass** ein oder mehrere Mess-Stellen (18) vor oder nach der stationären THz-Vermessung (Schritt ST1) markiert werden, zum eindeutigen Auffinden der ein oder mehreren Messstellen (18).

8. Verfahren nach Anspruch 7, **dadurch gekennzeichnet, dass** mehrere Mess-Stellen (18) in einem definierten Abstand (d18) vom Ende des Profilstücks (10) und um das Profilstück (10) herum markiert und vermessen werden (Schritt ST4), insbesondere für eine definierte Zugänglichkeit des Referenz-Messgerätes (14) und/oder zur Vermeidung der Detektion von Deformationen, die vom Abtrennvorgang (Schritt ST2) hervorgerufen wurden.

9. Verfahren nach einem der vorherigen Ansprüche, **dadurch gekennzeichnet, dass** die stationäre THz-Messvorrichtung (3) und das tragbare THz-Messgerät (13) THz-Messungen mit gleichen und/oder sich überlappenden Frequenzen oder Frequenzbereich durchführen, insbesondere mit dem gleichen Transceiver (20) (Schritt ST1, Schritt ST5).

10. Verfahren nach einem der vorherigen Ansprüche, **dadurch gekennzeichnet, dass** die stationäre THz-Messvorrichtung (3) und/oder das tragbare THz-Messgerät (13) THz-Strahlung (11) in dem Frequenzbereich von 0,01 bis 50 THz, insbesondere 0,02 bis 30 THz, vorzugsweise 0,05 bis 10 THz, ausgeben, insbesondere zur Laufzeitmessung und/oder mit Frequenzmodulation und/oder als gepulste Strahlung (Schritt ST1, Schritt ST5).

11. Verfahren nach einem der vorherigen Ansprüche, **dadurch gekennzeichnet, dass** als Profil ein Rohr (4) extrudiert wird (Schritt ST0) und nachfolgend abgetrennte Rohrstücke (10) vermessen werden (Schritt ST4, Schritt ST5),
wobei ein oder mehrere der folgenden geometrische Eigenschaften des Rohres (4) und/oder der Rohrstücke (10) ermittelt werden:
eine Wanddicke (wd), ein Außendurchmesser (A), ein Innendurchmesser (I), Deformationen, insbesondere eine Ovalität und/oder ein Sagging durch warmes Material.

12. Verfahren nach einem der vorherigen Ansprüche, **dadurch gekennzeichnet, dass** bei der Referenz-Messung (Schritt ST4) und/oder der Vermessung mittels des tragbaren THz-Messgerätes (13) (Schritt ST5) das Referenz-Messgerät (14) und/oder das tragbare THz-Messgerät (13) mit einer Auflagefläche, z. B. einer definierten Auflagekontur (21), händisch an eine äußere Wandfläche (12a) des Profils (4) angelegt wird.

13. Verfahren nach einem der vorherigen Ansprüche, **dadurch gekennzeichnet, dass** bei dem Schritt der Referenz-Vermessung (Schritt ST4) als Referenz-Messgerät (14) eines oder mehrere der folgenden Messgeräte eingesetzt werden:
- ein mechanisches Messgerät (14) zur mechanischen Vermessung des Profils (4),
- ein Ultraschall- Messgerät zur Ultraschall-Vermessung des Profils (4),
- ein Laser zur Laser-Vermessung des Profils (4).

14. Verfahren nach Anspruch 13, **dadurch gekennzeichnet, dass** als mechanisches Messgerät (14) eine Zange von einem Profilstückende (10a) her in das Profilstück (10) eingesetzt wird und Klemmbacken (14a, 14b) an die Innenfläche (12b) und die Außenfläche (12a) des Profils (4) angelegt werden, insbesondere mit einer definierten mechanischen Vorspannung (F) (Schritt ST4).

15. Verfahren nach Anspruch 13, **dadurch gekennzeichnet, dass** das Ultraschall- Messgerät von außen an das Profilstück (10) angesetzt wird, z. B. mit einem auf einen Messkopf des Ultraschall- Messgerätes aufgetragenen Gel (Schritt ST4).

16. Extrusions- und Messsystem (22) zum Herstellen und Vermessen von Profilstücken (10),
das aufweist:
eine Extrusionslinie (1) mit einem Extruder (2), der eingerichtet ist, Profile (4) zu extrudieren,
eine stationäre THz-Messvorrichtung (3), die hinter dem Extruder (2) angeordnet ist, zur Vermessung eines extrudierten Profils (4), wobei die THz-Messvorrichtung (3) einen oder mehrere THz-Sensoren (7) aufweist, die auf eine Symmetrieachse (A) der Extrusionslinie (1) ausgerichtet sind, zur Vermessung von geometrischen Eigenschaften des extrudierten Profils (4), einen Abzug (6) zum Abziehen des extrudierten Profils (4),
eine Trenneinrichtung (8) zum Abtrennen von Profilstücken (10) aus dem Profil (4),
ein Referenz-Messgerät (14), das eingerichtet ist, eine Referenz-Wanddicke (wd10) eines abgetrennten Profilstücks (10) mit einem zur THz-Vermessung alternativen Messverfahren zu vermessen,
ein tragbares THz-Messgerät (13) mit einer Auflagekontur (21), zum Aufsetzen auf ein abgetrenntes Profilstück (10) und zu dessen Vermessung, wobei das tragbare THz-Messgerät (13) programmierbar ist und ausgebildet ist, zur Kalibrierung einen Wert einer ermittelten Wanddicke (wd10) aufzunehmen, und
eine Steuer- und Auswerteeinrichtung (25), die eingerichtet und ausgebildet ist, über eine Schnittstelle einen Brechungsindex (n10), der mittels der Referenz-Wanddicke (wd10) und der durch das tragbare THz-Messgerät (13) ermittelten Wanddicke ermittelt ist, aufzunehmen und geometrische Eigenschaften des Profilstücks (10) aus zumindest dem ersten Messsignal (S1) der stationären THz-Messvorrichtung (3) auf Grundlage des ermittelten Brechungsindex (n10) zu ermitteln.

17. Extrusions- und Messsystem (22) nach Anspruch 16, **dadurch gekennzeichnet, dass** das Referenz-Messgerät (14) ausgebildet ist als eines oder mehrere der folgenden Messgeräte:
ein mechanisches Messgerät (14) zur mechanischen Vermessung des Profils (4),
- ein Ultraschall- Messgerät zur Ultraschall-Vermessung des Profils (4),
- ein Laser zur Laser-Vermessung des Profils (4).

## Claims

1. Method for calibrating a stationary THz measuring device (3) which measures geometric properties (wd4, D, I) of a profile (4) during an extrusion of the profile (4) by means of one or more THz sensors (7), comprising at least the following steps:
- after extrusion of the profile (4) (Step ST0) step of stationary inline THz measurement by outputting first THz radiation (11) from one or more THz sensors (7) of the stationary THz measuring device (3) onto the profile (4), detecting the THz radiation reflected at boundary surfaces (12a, 21b) of the profile (4) and outputting a first measurement signal (S1) of the stationary THz measuring device (3) (Step ST1 - stationary inline THz measurement),
- reference measurement of a wall thickness (wd10) at a measuring point (18) of a profile piece (10) by means of a reference measuring device (14) on the basis of a reference measuring method alternative to THz measurement, with generation of a second measuring signal (S2) (Step ST4 - reference measuring),
- measurement of the profile piece (10) at the measuring point (18) by means of a portable THz measuring device (13) with generation of a mobile third measuring signal (S3) (Step ST5 - mobile THz measuring),
- calibration of the third measurement signal (S3) on the basis of the second measurement signal (S2), with determination of a refractive index (n10) of the profile piece (10) (Step ST6 - calibration of the third measurement signal),
- calibration of the first measurement signal (S1) of the stationary THz measurement device (3) on the basis of the determined refractive index (n10) of the profile piece (10) (Step ST7 - stationary calibration).

2. Method according to claim 1, **characterised in that** after the calibration of the first measuring signal (S1) (Step ST7), a comparison step (ST8) is subsequently carried out,
in which the extruded profile (4) is measured by the stationary THz measuring device (3) and subsequently still before the separation (8) for comparison with the portable THz measuring device (13),
and the first measuring signal (S1) of the stationary THz measuring device (3) is compared with the third measuring signal (S3) of the portable THz measuring device (13), and
depending on the comparison, the calibration is evaluated as successful (St8 - comparison step).

3. Method according to claim 2, **characterised in that** in the step of comparison (ST8) it is determined whether the determined values of the wall thicknesses (wd4) lie within an accuracy range, e.g. by comparing a difference of the values with a limit value, and if the accuracy range is reached, e.g. if a difference of the values lies below a limit value, the calibration is evaluated as successful.

4. Method according to claim 2 or 3, **characterised in that** the comparison measurement is performed by the portable THz measuring device (13) (Step ST8) directly after the stationary THz measurement (Step ST1) and at the same measuring point (18) of the profile (4), for better comparability of the first measuring signal (S1 and third measuring signal (S3) (ST8 - comparison step).

5. Method according to one of the above claims, **characterised in that** the profile piece (10) is produced by separating it from the extruded profile (4) by means of a separating device (8) after the extrusion (Step St0) and the step of stationary in-line measurement (Step ST2).

6. Method according to claim 5, **characterised in that** the profile piece (10) is actively or passively cooled after separation (Step ST2), in particular to a final temperature (Step ST3 - cooling off).

7. Method according to one of the above claims, **characterised in that** one or more measurement points (18) are marked before or after the stationary THz measurement (Step ST1), for unambiguous location of the one or more measurement points (18).

8. Method according to claim 7, **characterised in that** several measuring points (18) are marked and measured at a defined distance (d18) from the end of the profile piece (10) and around the profile piece (10) (Step ST4), in particular, for a defined accessibility of the reference measuring device (14) and/or to avoid the detection of deformations caused by the separation process (Step St2).

9. Method according to one of the above claims, **characterised in that** the stationary THz measuring device (3) and the portable THz measuring device (13) perform THz measurements with the same and/or overlapping frequencies or frequency range, in particular, with the same transceiver (2) (Step ST1, Step ST5).

10. Method according to one of the above claims, **characterised in that** the stationary THz measuring device (3) and/or the portable THz measuring device (13) output THz radiation (11) in the frequency range from 0.01 to 50 THz, in particular 0.02 to 30 THz, preferably 0.05 to 10 THz, in particular as time-of-flight measurement and/or frequency modulation and/or pulsed radiation (Step ST1, Step ST5).

11. Method according to one of the above claims, **characterised in that** a pipe (4) is extruded as a profile and subsequently separated pipe segments (10) are measured (Step ST4, Step ST5),
wherein one or more of the following geometric properties of the pipe (4) and/or the pipe pieces are determined: a wall thickness (wd), an outer diameter (A), an inner diameter (I), deformations, in particular an ovality and/or sagging due to hot material.

12. Method according to one of the above claims, **characterised in that** during the reference measurement (Step ST4) and/or the measurement by means of the portable THz measuring device (13) (Step ST5) the reference measuring device (14) and/or the portable THz measuring device (13) is placed manually against an outer wall surface (12a) of the profile (4) with a contact surface, e.g., a defined contact contour (21).

13. Method according to one of the above claims, **characterised in that** in the reference measurement step (Step St4) one or more of the following measuring devices are used as reference measuring device (14):
- a mechanical measuring device (14) for mechanical measurement of the profile (4),
- an ultrasonic measuring device for ultrasonic measurement of the profile (4), and
- a laser for laser measurement of the profile (4).

14. Method according to claim 13, **characterised in that** as the mechanical measuring device (14), a pair of pliers is inserted into the profile piece (10) from one profile piece end (10a) and clamping jaws (14a, 14b) are applied to the inner surface (12b) and the outer surface (12a) of the profile (4), in particular, with a defined mechanical bias (F) (Step ST4).

15. Method according to claim 13, **characterised in that** the ultrasonic measuring device is applied to the profile piece (10) from the outside, e.g. with a gel applied to a measuring head of the ultrasonic measuring device (Step ST4).

16. Extrusion and measuring system (22) for producing and measuring profile pieces (10),
comprising:
an extrusion line (1) comprising an extruder (2) adapted to extrude profiles (4),
a stationary THz measuring device (3) arranged downstream of the extruder (2) for measuring an extruded profile (4), the THz measuring device (3) comprising one or more THz sensors (7) aligned with an axis of symmetry (A) of the extrusion line (1), for measuring geometric properties of the extruded profile (4), a haul-off for hauling off the extruded profile (4),
a separating device (8) for separating profile pieces (10) from the profile (4),
a reference measuring device (14) which is set up to measure a reference wall thickness (wd10) of a separated profile piece (10) using a measuring method which is alternative to THz measuring,
a portable THz measuring device (13) with a support contour (21), for placing on a separated profile piece (10) and for measuring it,
the portable THz measuring device (13) being programmable and being designed to record a value of a determined wall thickness (wd10) for calibration purposes, and
a control and evaluation device (25) set up and designed to record via an interface a determined refractive index (n10) which is determined by means of the reference wall thickness (wd10) and the wall thickness determined by the portable THz measuring device (13), and to determine geometric properties of the profile piece (10) from at least the first measurement signal (S1) of the stationary THz measuring device (3) on the basis of the determined refractive index (n10).

17. Extrusion and measuring system (22) according to claim 16,
**characterised in that** the reference measuring device (14) is realized as one or more of the following measuring devices:
- a mechanical measuring device (14) for mechanical measurement of the profile (4),
- an ultrasonic measuring device for ultrasonic measurement of the profile (4),
- a laser for laser measurement of the profile (4).

## Revendications

1. Procédé d'étalonnage d'un dispositif (3) de mesure THz stationnaire qui, lors de l'extrusion d'un profilé (4), mesure les propriétés géométriques (wd4, D, I) du profilé (4) à l'aide d'un ou plusieurs capteurs THz (7),
comprenant au moins les étapes suivantes :
- après l'étape d'extrusion du profilé (4) (étape ST0), mesure THz en ligne stationnaire par émission d'un premier rayonnement THz (11) par un ou plusieurs capteurs THz (7) du dispositif (3) de mesure THz stationnaire sur le profilé (4), détection du rayonnement THz réfléchi aux interfaces (12a, 12b) du profilé (4) et émission d'un premier signal de mesure (S1) du dispositif (3) de mesure THz stationnaire (étape ST1 - mesure THz en ligne stationnaire),
- mesure de référence d'une épaisseur de paroi (wd10) à un point de mesure (18) d'une pièce profilée (10) à l'aide d'un appareil (14) de mesure de référence sur la base d'un procédé de mesure de référence alternatif à la mesure THz, en générant un deuxième signal de mesure (S2) (étape ST4 - mesure de référence),
- mesure de la pièce profilée (10) au point de mesure (18) à l'aide d'un appareil (13) de mesure THz portable en générant un troisième signal de mesure (S3) mobile (étape ST5 - mesure THz mobile),
- étalonnage du troisième signal de mesure (S3) sur la base du deuxième signal de mesure (S2), en déterminant un indice de réfraction (n10) de la pièce profilée (10) (étape ST6 - étalonnage du troisième signal de mesure),
- étalonnage du premier signal de mesure (S1) du dispositif (3) de mesure THz stationnaire sur la base de l'indice de réfraction (n10) déterminé de la pièce profilée (10) (étape ST7 - étalonnage stationnaire).

2. Procédé selon la revendication 1, **caractérisé en ce que**, après l'étalonnage du premier signal de mesure (S1) (étape ST7), une étape de comparaison (ST8) sera ensuite réalisée,
au cours de laquelle le profilé (4) extrudé sera mesuré par le dispositif (3) de mesure THz stationnaire puis, avant la séparation (8), soumis à une comparaison avec l'appareil (13) de mesure THz portable,
et le premier signal de mesure (S1) du dispositif (3) de mesure THz stationnaire sera comparé au troisième signal de mesure (S3) de l'appareil (13) de mesure THz portable, et
en fonction de la comparaison, l'étalonnage sera évalué comme réussi (ST8 - étape de comparaison).

3. Procédé selon la revendication 2, **caractérisé en ce que**, lors de l'étape de comparaison (ST8), il sera déterminé si les valeurs déterminées pour l'épaisseur de paroi (wd4) se situent dans une plage de précision,
par exemple en comparant la différence entre les valeurs avec une valeur limite, et lorsque la plage de précision est atteinte, par exemple si la différence entre les valeurs est inférieure à une valeur limite, l'étalonnage sera évalué comme réussi.

4. Procédé selon la revendication 2 ou 3, **caractérisé en ce que** la mesure de comparaison par l'appareil (13) de mesure THz portable (étape ST8) a lieu directement après la mesure THz stationnaire (étape ST1) et au même point de mesure (18) du profilé (4), afin de permettre une meilleure comparabilité entre le premier signal de mesure (S1) et le troisième signal de mesure (S3) (étape de comparaison ST8).

5. Procédé selon l'une des revendications précédentes, **caractérisé en ce que** la pièce profilée (10) sera produite en étant séparée du profilé (4) extrudé à l'aide d'un dispositif de séparation (8) (étape ST2) après l'extrusion (étape ST0) et l'étape de mesure en ligne stationnaire (étape ST1).

6. Procédé selon la revendication 5, **caractérisé en ce que** la pièce profilée (10) sera refroidie activement ou passivement après la séparation (étape ST2), en particulier jusqu'à une température finale (étape ST3 - refroidissement).

7. Procédé selon l'une des revendications précédentes, **caractérisé en ce qu'**un ou plusieurs points de mesure (18) seront marqués avant ou après la mesure THz stationnaire (étape ST1) afin de localiser clairement les un ou plusieurs points de mesure (18).

8. Procédé selon la revendication 7, **caractérisé en ce que** plusieurs points de mesure (18) seront marqués et mesurés (étape ST4) à une distance définie (d18) de l'extrémité de la pièce profilée (10) et autour de la pièce profilée (10), en particulier pour une accessibilité définie de l'appareil (14) de mesure de référence et/ou pour éviter la détection de déformations provoquées par l'opération de séparation (étape ST2).

9. Procédé selon l'une des revendications précédentes, **caractérisé en ce que** le dispositif (3) de mesure THz stationnaire et l'appareil (13) de mesure THz portable réalisent des mesures THz avec des fréquences ou une plage de fréquences identiques et/ou se chevauchant, en particulier avec le même émetteur-récepteur (20) (étape ST1, étape ST5).

10. Procédé selon l'une des revendications précédentes, **caractérisé en ce que** le dispositif (3) de mesure THz stationnaire et/ou l'appareil (13) de mesure THz portable émettent un rayonnement THz (11) dans la plage de fréquences de 0,01 à 50 THz, en particulier de 0,02 à 30 THz, de préférence de 0,05 à 10 THz, en particulier pour la mesure du temps de transit et/ou avec modulation de fréquence et/ou sous forme de rayonnement pulsé (étape ST1, étape ST5).

11. Procédé selon l'une des revendications précédentes, **caractérisé en ce qu'**un tube (4) sera extrudé en tant que profilé (étape ST0) et les sections de tube (10) séparées seront ensuite mesurées (étape ST4, étape ST5),
dans lequel une ou plusieurs des propriétés géométriques suivantes du tube (4) et/ou des sections de tube (10) seront déterminées :
une épaisseur de paroi (wd), un diamètre extérieur (A), un diamètre intérieur (I), des déformations, en particulier une ovalité et/ou un fléchissement dus à un matériau chaud.

12. Procédé selon l'une des revendications précédentes, **caractérisé en ce que**, lors de la mesure de référence (étape ST4) et/ou de la mesure à l'aide de l'appareil (13) de mesure THz portable (étape ST5), l'appareil (14) de mesure de référence et/ou l'appareil (13) de mesure THz portable seront pourvus d'une surface d'appui, par exemple un contour d'appui (21) défini, appliquée manuellement contre une surface (12a) de paroi extérieure du profilé (4).

13. Procédé selon l'une des revendications précédentes, **caractérisé en ce que**, lors de l'étape de mesure de référence (étape ST4), un ou plusieurs des appareils de mesure suivants seront utilisés comme appareil (14) de mesure de référence :
- un appareil (14) de mesure mécanique pour la mesure mécanique du profilé (4),
- un appareil de mesure à ultrasons pour la mesure par ultrasons du profilé (4),
- un laser pour la mesure par laser du profilé (4).

14. Procédé selon la revendication 13, **caractérisé en ce que**, en tant qu'appareil (14) de mesure mécanique, une pince sera insérée dans la pièce profilée (10) à partir d'une extrémité (10a) de la pièce profilée et des mâchoires de serrage (14a, 14b) seront appliquées contre la surface intérieure (12b) et la surface extérieure (12a) du profilé (4), en particulier avec une précontrainte mécanique (F) définie (étape ST4).

15. Procédé selon la revendication 13, **caractérisé en ce que** l'appareil de mesure à ultrasons sera placé sur la pièce profilée (10) depuis l'extérieur, par exemple avec un gel appliqué sur une tête de mesure de l'appareil de mesure à ultrasons (étape ST4).

16. Système (22) d'extrusion et de mesure pour la fabrication et la mesure de pièces profilées (10),
qui comprend :
une ligne d'extrusion (1) avec une extrudeuse (2) qui est conçue pour extruder des profilés (4),
un dispositif (3) de mesure THz stationnaire, qui est agencé derrière l'extrudeuse (2), pour mesurer un profilé (4) extrudé, le dispositif (3) de mesure THz comprenant un ou plusieurs capteurs THz (7), qui sont alignés sur un axe de symétrie (A) de la ligne d'extrusion (1), pour mesurer les propriétés géométriques du profilé (4) extrudé,
un extracteur (6) pour extraire le profilé (4) extrudé,
un dispositif de séparation (8) pour séparer les pièces de profilé (10) du profilé (4),
un appareil (14) de mesure de référence qui est conçu pour mesurer une épaisseur (wd10) de paroi de référence d'une pièce profilée (10) séparée en utilisant un procédé de mesure alternatif à la mesure THz,
un appareil (13) de mesure THz portable avec un contour d'appui (21), à poser sur une pièce profilée (10) séparée et à mesurer, l'appareil (13) de mesure THz portable étant programmable et réalisé pour enregistrer une valeur d'une épaisseur (wd10) de paroi déterminée à des fins d'étalonnage, et
un dispositif (25) de commande et d'évaluation qui est conçu et réalisé pour enregistrer, via une interface, un indice de réfraction (n10) qui est déterminé à l'aide de l'épaisseur (wd10) de paroi de référence et de l'épaisseur de paroi déterminée par l'appareil (13) de mesure THz portable, et pour déterminer les propriétés géométriques de la pièce profilée (10) à partir au moins du premier signal de mesure (S1) du dispositif (3) de mesure THz stationnaire sur la base de l'indice de réfraction (n10) déterminé.

17. Système d'extrusion et de mesure (22) selon la revendication 16, **caractérisé en ce que** l'appareil (14) de mesure de référence est réalisé en tant que un ou plusieurs des appareils de mesure suivants :
- un appareil (14) de mesure mécanique pour la mesure mécanique du profilé (4),
- un appareil de mesure à ultrasons pour la mesure par ultrasons du profilé (4),
- un laser pour la mesure par laser du profilé (4).
